## Europäisches Patentamt

## European Patent Office

## Office européen des brevets

(11) Veröffentlichungsnummer: **0 057 464**
**B1**

(12) **EUROPÄISCHE PATENTSCHRIFT**

(45) Veröffentlichungstag der Patentschrift: **25.05.88**

(21) Anmeldenummer: **82100736.6**

(22) Anmeldetag: **02.02.82**

(51) Int. Cl.⁴: **G 01 D 5/30**

(54) **Faseroptische Sensorvorrichtung.**

(30) Priorität: **02.02.81 US 230808**

(43) Veröffentlichungstag der Anmeldung:
**11.08.82 Patentblatt 82/32**

(45) Bekanntmachung des Hinweises auf die
Patenterteilung:
**25.05.88 Patentblatt 88/21**

(84) Benannte Vertragsstaaten:
**DE FR GB**

(56) Entgegenhaltungen:
**DE-A-2 905 630**
**DE-A-2 920 489**
**DE-A-3 007 462**
**US-A-4 275 296**
**US-A-4 293 188**

(73) Patentinhaber: **Siemens Aktiengesellschaft**
**Berlin und München**
**Wittelsbacherplatz 2**
**D-8000 München 2 (DE)**

(72) Erfinder: **Sichling, Georg H., Dr.**
**2026 Arthur Place**
**Corvallis Oregon 97330 (US)**
Erfinder: **Schwab, Helmut**
**61 Westcott Road**
**Princeton New Jersey 08540 (US)**
Erfinder: **Schwab, Bernard**
**61 Westcott Road**
**Princeton New Jersey 08540 (US)**

Courier Press, Leamington Spa, England.

**Beschreibung**

Die vorliegende Erfindung betrifft eine faseroptische Sensorvorrichtung zum Messen eines physikalischen Parameters.

Die faseroptische Signalübertragung ist während der letzten Jahre eine wichtige technologische Inovation bei elektronischen Systemen geworden. Unter den Gründen für die Vorzüge der faseroptischen Signalübertragung gegenüber der früheren elektrischen Signalübertragung ist die Verfügbarkeit zusätzlicher Bandbreite kombiniert mit der Eliminierung elektromagnetischer Interferenzen. Andere Gründe sind die bequeme Trennung der elektrischen Potentiale verschiedener Systemkomponenten.

Die faseroptische Übertragung ist bisher zur Kommunikation über mittlere und lange Strecken und zur digitalen Datenübertragung in gewissen industriellen Anwendungen, wo elektromagnetische Interferenz oder die elektrische Trennung besonders wichtig ist, benutzt worden. Faseroptische Übertragungsleitungen sind auch in Verbindung mit Hochspannungsschaltern mit der Kraftwerkssteuerung und mit der Prozeßsteuerung, elektrischer Öfen verwendet worden. Die Anwendung in Flugzeugen und in Kraftfahrzeugen wird diskutiert.

Bei Steuersystemen wird die Signalkommunikation in digitaler Form nicht nur zwischen Datenverarbeitungseinheiten, sondern auch in Kommunikation mit Eingabe- und Ausgabegeräten durchgeführt. Eine spezielle Signalempfindlichkeit existiert zwischen Sensoren und Datenverarbeitungsgeräten. Deshalb wurde die faseroptische Kommunikation auf digitaler Basis zur Signalübertragung zwischen Sensoren und dem Steuersystem verwendet (siehe Control Engineering, Febr. 1979, S. 30 bis 33). Die Sensoranordnungen dienen zur Erreichung von Eingangsinformation relativ zur physikalischen Parametern, die für das Steuersystem wichtig sind, wie beispielsweise Temperatur, Druck, Position, Fluß, Geschwindigkeit usw..

Zur Erreichung einer Sensoranordnung hoher Genauigkeit ist es ratsam, den zu messenden physikalischen Parameter direkt in ein optisches Signal umzuwandeln und dieses Signal durch eine faseroptische Übertragungsleitung zur Auswertungsseite des elektronischen Systems zu überführen. Zu diesem Zweck können Sensoranordnungen so konstruiert sein, daß sie keine Energiequelle auf der Meßseite erfordern. Derartige Sensoranordnungen arbeiten ganz auf optischen Prinzipien und streng mit faseroptischer Signalübertragung. Diese Sensoranordnungen können als passive Sensoren bezeichnet werden. Ihnen wohnt der Vorteil eines hohen Schutzes gegen elektromagnetische Interferenzen und der Einfachheit des Systems inne.

Sensoranordnungen können auch so konstruiert sein, daß die eine Hilfsenergiequelle für das Abtasten aufweisen, um schließlich bei optischen Signalen anzukommen, die durch die faseroptische Übertragungsleitung überführt werden können. Die Energiequelle kann eine optische, eine elektrische oder irgendeine andere Quelle sein, während das Abtastprinzip und die Signalübertragung noch optischer Natur sind. Solche Anordnungen können als aktive Anordnungen bezeichnet werden. Das Vorsehen einer Hilfsquelle auf der Meßseite hat gewöhnlich zusätzliche Kosten zur Folge.

Eine Sensorvorrichtung nach dem Oberbegriff des Patentanspruchs 1 ist aus der DE—A—29 20 489 bekannt. Bei der dort beschriebenen Vorrichtung werden zwei Wellenlängen und damit Spektralfarben abwechselnd übertragen. Die Modulatoreinrichtung besteht aus einem Filter, das die eine Spektralfarbe stärker beeinflußt als die andere. Es gelangen beide durch das Filter beeinflußte Spektralfarben in das Detektorfenster einer Detektoreinrichtung.

Aus der DE—A—29 05 630 ist eine Sensorvorrichtung bekannt, bei der die Lichterzeugungseinrichtung zwei Spektralfarben aussendet, die über eine optische Faserleitung übertragen werden. Nur eine Spektralfarbe gelangt zur Modulatoreinrichtung, die das zugeleitete Licht in Abhängigkeit von einem physikalischen Parameter beeinflußt. Die andere Spektralfarbe wird unbeeinflußt zur einen Faserleitung zurückgeleitet. Die Modulatoreinrichtung dämpft die eine Spektralefarbe in Abhängigkeit von dem zu messenden physikalischen Paramter.

Aus der DE—A—30 07 462 geht eine spektralselektive Modulatoreinrichtung in Form eine im Strahlengang des aus einer optischen Faserleitung zugeleiteten Lichts angeordneten Flüssigkristallschicht hervor. Aus der gesamten Druckschrift geht nicht hervor, ob die dortige Lichterzeugungseinrichtung mehrere Spektralfarben aussendet oder nur eine, wie es beispielsweise bei einem Laser der Fall wäre. Außerdem ist in dieser Druckschrift nichts Näheres über die Detektoreinrichtung ausgesagt.

Aufgabe der Erfindung ist es, die Technik auf dem Gebiet der faseroptischen Sensorvorrichtungen mit einer neuartigen Sensorvorrichtung zu bereichern, die eine Vielzahl von Gestaltungsmöglichkeiten eröffnet.

Diese Aufgabe wird bei eines Vorrichtung der obenstehend genannten mit durch die im kennzeichnenden Teil des Patentanspruchs 1 angegebenen Merkmale gelöst.

Bevorzugte und vorteilhafte Ausgestaltungen dieser Sensorvorrichtung gehen aus den Ansprüchen 2 bis 23 hervor.

Die Erfindung weist folgende Vorteile auf: Bei der erfindungsgemäßen Vorrichtung ist das Meßsignal störenden Umwelteinflüssen nicht oder nur geringfügig ausgesetzt. Die erfindungsgemäße Sensorvorrichtung kann feindlichen Umweltbedingungen, wie beispielsweise Feuchtigkeit, Öl, Säure une elektromagnetischen Interferenzen oder Störungen widerstehen. Sie weist eine sehr einfache Struktur auf. Sie kann relativ einfach und billig hergestellt werden. Sie benötigt zur Erhaltung eines Meßsignals von der von der Auswerteseite entfernten Meßseite eine einzige Lichtquelle. Sie kann bei selbstfahrenden oder sich selbst bewegenden Systemen oder Verfahren verwendet werden.

In Zusammenfassung weist die erfindungsgemäße faseroptische Sensorvorrichtung zur Messung eines physikalischen Parameters eine Lichtquelle auf, die Licht in Richtung einer ersten lichtübertragenden Faser oder eines optischen Faserkabels aussendet. Das Licht wird von dem Lichteintrittsende der Faser empfangen und dessen Lichtaustrittsende übertragen. Eine das Licht aufspaltende und/auswählende Vorrichtung, wie beispielsweise ein Prisma oder ein Interferenzfilter, ist bei dem Lichtaustrittsende der ersten lichtübertragenden Faser angeordnet. Diese Vorrichtung spaltet das von der ersten lichtübertragenden Faser empfangene Licht in seine spektralen Komponenten auf. Die Sensorvorrichtung weist auch eine zweite lichtübertragende Faser auf. Das Lichteintrittsende der zweiten Faser empfängt einzelne Spektralkomponenten, wodurch oder wobei die Selektion dieser Komponenten von dem zu messenden physikalischen Parameter abhängt. Die zweite Faser strahlt die spektrale(n) Komponente(n) durch ihr Lichtaustrittsende ab. Diesem Lichtaustrittsende ist ein Lichtdetektor zugeordnet, der die von der zweiten lichtübertragenden Faser abgestrahlte spektrale(n) Komponente(n) empfängt. Das Ausgangssignal des Detektors ist ein Maß für den physikalischen Parameter.

Bevorzugte Ausführungsformen der Erfindung sind in den Figuren dargestellt und werden in der folgenden Beschreibung näher erläutert. Von den Figuren zeigen:

Figur 1 eine Ausführungsform einer faseroptischen Sensorvorrichtung, die ein Prisma zum Messen eines physikalischen Parameters aufweist;

Figur 2 ein Diagramm, welches die Empfindlichkeit des in der Ausführungsform nach Figur 1 verwendeten Detektors in Abhängigkeit von der Wellenlänge des verwendeten Lichts angibt;

Figur 3 eine modifizierte Ausführungsform einer faseroptischen Sensorvorrichtung mit einem Prisma;

Figur 4 eine Ausführungsform einer faseroptischen Sensorvorrichtung, die ein Prisma enthält, das an einem Ende einer Übertragungsleitung ausgebildet ist;

Figur 5 eine Ausführungsform einer faseroptischen Sensorvorrichtung, die ein Interferenzfilter und einen Lichtdetektor mit Brückenschaltung aufweist;

Figur 6 ein Empfindlichkeitsdiagramm bezüglich der Ausführungsform nach Figur 5;

Figur 7 ein Empfindlichkeitsdiagramm für andere Eigenschaften der Ausführungsform nach Figur 5;

Figur 8 eine Ausführungsform einer faseroptischen Sensorvorrichtung zur Druckmessung;

Figur 9 eine Ausführungsform einer faseroptischen Sensorvorrichtung zur Messung einer Druckdifferenz;

Figur 10 eine Ausführungsform einer faseroptischen Sensorvorrichtung, die ein Interferenzfilter, einen Reflektor und einen Lichtdetektor in Brückenschaltung aufweist;

Figur 11 ein Teilansicht einer Ausführungsform einer faseroptischen Sensorvorrichtung, die ein gestuftes Interferenzfilter aufweist;

Figur 12 eine Teilansicht einer Ausführungsform einer faseroptischen Sensorvorrichtung, die ein Absorptionsfilter aufweist;

Figur 13 ein Ausführungsform eines Absorptionsfilters;

Figur 14 eine andere Ausführungsform einer faseroptischen Sensorvorrichtung, die ein Absorptionsfilter aufweist;

Figur 15 eine Ausführungsform einer Lichtdetektorvorrichtung zur Verwendung in einer faseroptischen Sensorvorrichtung;

Figur 16 eine Ausführungsform einer Lichtdetektorvorrichtung für eine faseroptische Sensorvorrichtung, die ein Fotodiodenfeld aufweist;

Figur 17 eine andere Ausführungsform einer Lichtdetektorvorrichtung für einen faseroptischen Sensor, die eine Anzahl von Fotorwiderständen aufweist;

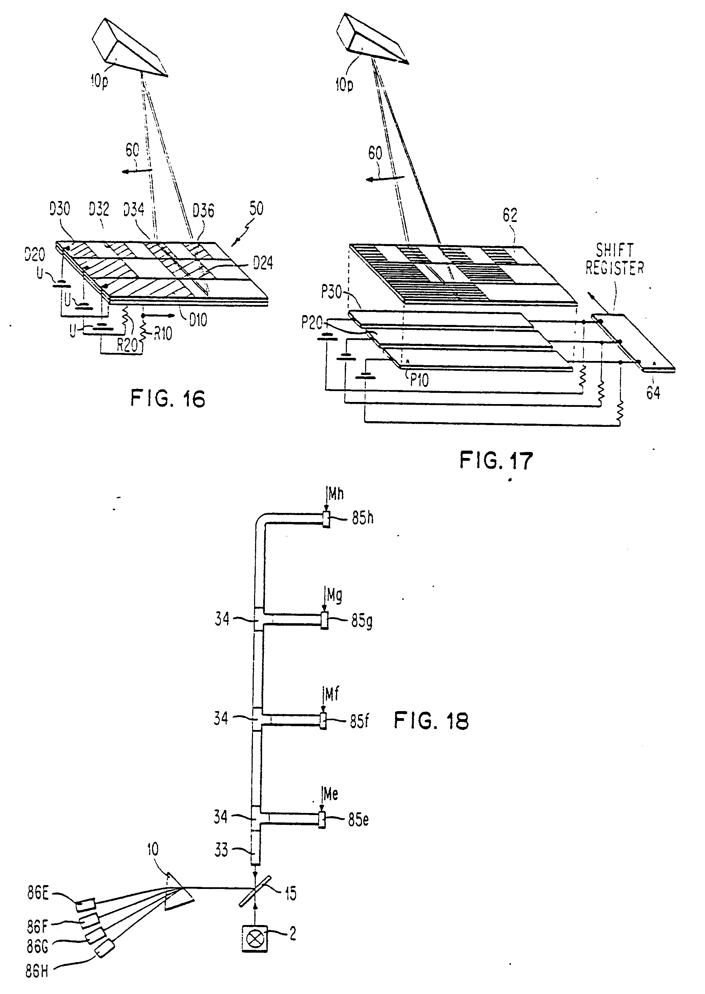

Figur 16 ein faseroptisches Sensorsystem, welches verschiedene faseroptische Sensorvorrichtungen für Multiplexbetrieb aufweist;

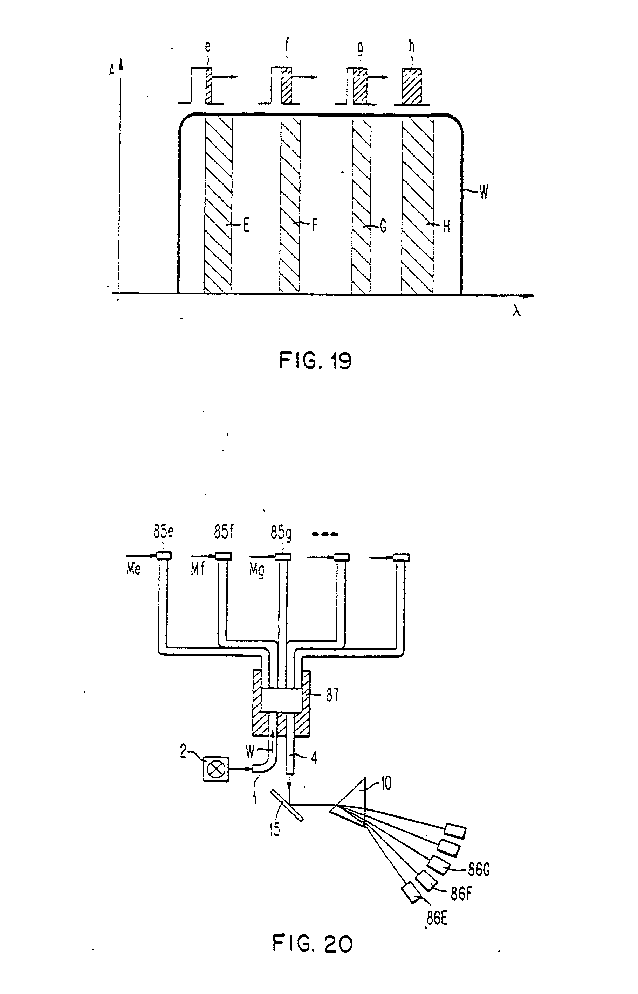

Figur 19 ein Diagramm, welches die Empfindlichkeiten der in Figur 18 dargestellten Sensorvorrichtungen zeigt; und

Figur 20 eine andere Ausführungsform eines faseroptischen Sensorsystems aus mehreren Sensoren.

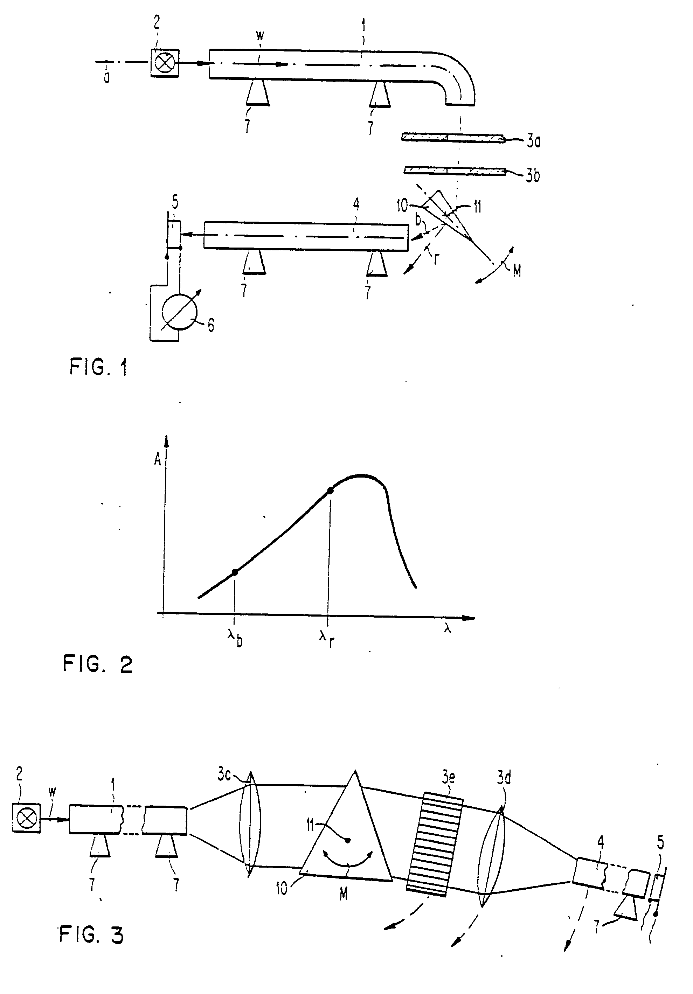

In allen Figuren 1 bis 20 sind für die gleichen oder äquivalenten Komponenten und Elemente die gleichen Bezugzeichen verwendet.

In der schematischen Darstellung in Figure 1 wird ein Ende einer ersten lichtübertragenden Faser oder Eingangsfaserleitung 1 mit Licht einer Lichtquelle 2 beleuchtet. Die Eingangsfaserleitung 1 ist aus einem lichtleitenden Material gefertigt und kann gemäß Figur 1 an seinen Endabschnitten flexibel sein. Die Eingangsfaserleitung 1 kann aus einer einzelnen optischen Faser bestehen. Vorzugsweise besteht sie jedoch aus einem faseroptischen Kabel, das verschiedene Glasfasern enthält. Die Symmetrieachse ist mit *a* bezeichnet.

Die Lichtquelle 2 sendet ein relativ breites Lichtspektrum aus. Sie kann beispielsweise weißes Licht *w* hervorbringen, welches alle sichtbaren spektralen Komponenten enthält. Die Lichtquelle 2 kann eine Glühlampe oder eine Vielheit von LEDs (Licht emittierenden Dioden) sein, die in verschiedenen Farben oder Spektren strahlen. Die Lichtquelle 2 kann infrarotes, sichtbares oder ultraviolettes Licht aussenden.

Das Licht aus der Lichtquelle 2 wird zu dem anderen Ende des optischen Kabels 1 geleitet und von dort durch einen zwei Diaphragmen 3a und 3b enthaltenden Kollimator zu einem lichtdispergierenden Element, welches durch ein Prisma 10 repräsentiert ist. Die Diaphragmen 3a und 3b und Kollimators sind zwischen dem optischen Kabel 1 und dem Prisma 10 parallel zu- und im Abstand voneinander angeordnet, damit ein wenigstens gut angenähert paralleler Lichtstrahl erhalten wird. Die Öffnungen oder Löcher in beiden Platten 3a und 3b sind gleich oder kleiner als der Durchmesser des lichtüberführenden Kernes der Eingangsleitung 1. Das Prisma 10 bewirkt eine Aufspaltung das ankommenden Lichtstrahls in zwei Spektralfarben. In dem dargestellten Beispiel erreicht nur die Komponente hoher Frequenz oder blaue Komponente b das Eingangsende einer zweiten lichtüberführenden Faser oder Ausgangsfaserleitung 4. Die langwellige oder rote Komponente r geht verloren.

Das Prisma 10 kann um eine Achse 11 verdreht werden. Die Verdrehung wird unter dem Einfluß des Parameters oder der Quantität M bewirkt, der bzw. die zu messen ist. Alternativ dazu könnte das Prisma 10 in einer fixierten Stellung gehalten werden, wohingegen das Eingangsende der Ausgangsfaserleitung 4 relativ zum Prisma 10 verdreht wurde. Die Anwendung eines Prismas 10 ist weniger teuer als die Verwendung anderer farbselektiver oder lichtdispergierender Elemente, wie beispielsweise ein Fabry-Perrot-Etalon.

Die Ausgangsfaserleitung 4 ist von der gleichen Struktur wie die Eingangsfaserleitung 1. Licht, welches die Ausgangsfaserleitung 4 verläßt, erreicht einen Lichtdetektor 5, der für das empfangene Licht empfindlich ist. Dieser Lichtdetektor 5 ist direkt an dem Ende der Ausgangsfaserleitung 4 angeordnet. Der Lichtdetektor 5 ist vorzugsweise eine fotoelektronische Vorrichtung, die beispielsweise eine Fotodiode enthält. In dem dargestellten Beispiel ist sie ein Fotoelement. Die Ausgangsspannung des Lichtdetektors 5 wird mittels eines Meßinstruments 6 gemessen oder anderweitig verarbeitet. Die Eingangsfaserleitung 1 und/oder die Ausgangsfaserleitung 4 kann mittels Befestigungselementen 7 fixiert sein.

Unter dem Einfluß des zu messenden Parameters M wird das Prisma 10 um seine Achse 11 gedreht. Wenn das Prisma 10 sich dreht, treffen verschiedene spektrale Komponenten auf das Eingangsende des rückführenden Faserkabels 4, wodurch bewirkt wird, daß verschiedene Farben von dem Fotodetektor 5 empfangen werden. Die Intensität des auftreffenden Lichts wird gemessen. Wenn das Prisma 10 sich unter dem Einfluß des Parameters M im Uhrzeigersinn in der Richtung des eingezeichneten Doppelpfeiles bewegt, nimmt die Frequenz des von der Ausgangsfaserleitung 4 empfangenen Lichts kontinuierlich ab, bis endlich nur die rote Lichtkomponente r des weißen Lichts w empfangen und von dem Detektor 5 gemessen wird.

Jeder physikalische Parameter, beispielsweise Druck, Temperatur, Ort, Veränderung usw., der die Ausübung einer Kraft in der Richtung des Doppelpfeiles ermöglicht, kann als eine zu messende Quantität M benutzt werden.

Der Detektor 5 ist für die verschiedenen Spektralfarben zu deren Unterscheidung verschieden empfindlich entweder durch eine über dem Spektralbereich der Lichtquelle 2 variierende Empfindlichkeit des Detektors oder durch ein nicht dargestelltes vor dem tatsächlichen Empfänger angeordnet Spezialfilter, welche Filter-Empfänger-Kombination solche Eigenschaften aufweist.

In der Figur 2 ist die bekannte Beziehung zwischen der relativen spektralen Empfindlichkeit A und der Wellenlänge $\lambda$ eines foto- oder optoelektronischen Germaniumelements dargestellt, welches vorteilhaft als die Fotodetektorvorrichtung 5 benutzt werden kann. Der Detektor 5 ist frequenzselektiv. Aus dem Diagramm der Figur 2 leuchtet es ein, daß in dem Spektralbereich zwischen der Wellenlänge $\lambda_b$ der blauen Lichtkomponente b und der Wellenlänge $\lambda_r$ der roten Lichtkomponente r die Empfindlichkeit A fast direkt proportional zur Wellenlänge $\lambda$ oder umgekehrt proportional zur Lichtfrequenz variiert. Das gleiche gilt für den durch das Meßinstrument 6 angezeigten Meßwert. Es ist wichtig, daß zwischen diesem Wert und der Stellung des Prismas 10, das unter dem Einfluß des zu messenden Parameters M gedreht wird, eine definierte Beziehung existiert.

Die Figur 3 zeigt eine Ausführungsform eines faseroptischen Sensors, der dem in Figur 1 dargestellten ähnelt. Diese Ausführungsform kann bei Präzisionsmessungen angewendet werden. Zur Vermeidung der Divergenz des von der Eingangsfaserleitung 1 ausgestrahlten Lichtstrahls ist zwischen dem Ausgangsende oder ausgangsseitigen Ende der Eingangsfaserleitung 1 und dem Prisma 10 eine erste Linse 3c angeordnet. Das Ausgangsende ist im Brennpunkt der Linse 3c angeordnet. Dadurch erzeugt die erste Linse 3c einen parallelen Lichtstrahl oder ein Parallelstrahlbündel. Eine zweite Linse 3d ist zwischen dem Prisma 10 und dem Eingangsende oder eingangsseitigen Ende der Ausgangsfaserleitung 4 angeordnet. Diese zweite Linse 3d konzentriert den gestreuten Lichtstrahl in das Eingangsende der Leitung 4, das im Brennpunkt dieser Linse 3d angeordnet ist. Beide Linsen 3c und 3d können von niedriger Dispersion sein. Die Anordnung der Linsen 3c, 3d und des Prismas 10 ist die gleiche wie in dem bekannten Prismenspektrometer. D.h. das Prisma 10, die zweite Linse 3d und die Öffnung oder Mündung der Ausgangsfaserleitung 4 kann um die Achse 11 des Prismas 10 gedreht werden. Eine Drehung der aus dem Prisma 10, der Linse 3d und der Öffnung der Leitung 4 zusammengesetzten Konstruktion hat eine Änderung der Farbe entsprechend des physikalischen Parameters M zur Folge. Diese Farbänderung wird durch die Detektoreinrichtung 5 bestimmt.

Vorteilhaft ist es, in die Anordnung ein Richtungsfilter oder einen Kollimator 3a aufzunehmen. Dieses Richtungsfilter 3e kann zwischen dem Prisma 10 und dem Eingangsende der Faserleitung 4 angeordnet werden. Das Richtungsfilter 3e eliminiert Strahlen, die nicht unter einem speziellen Winkel einfallen.

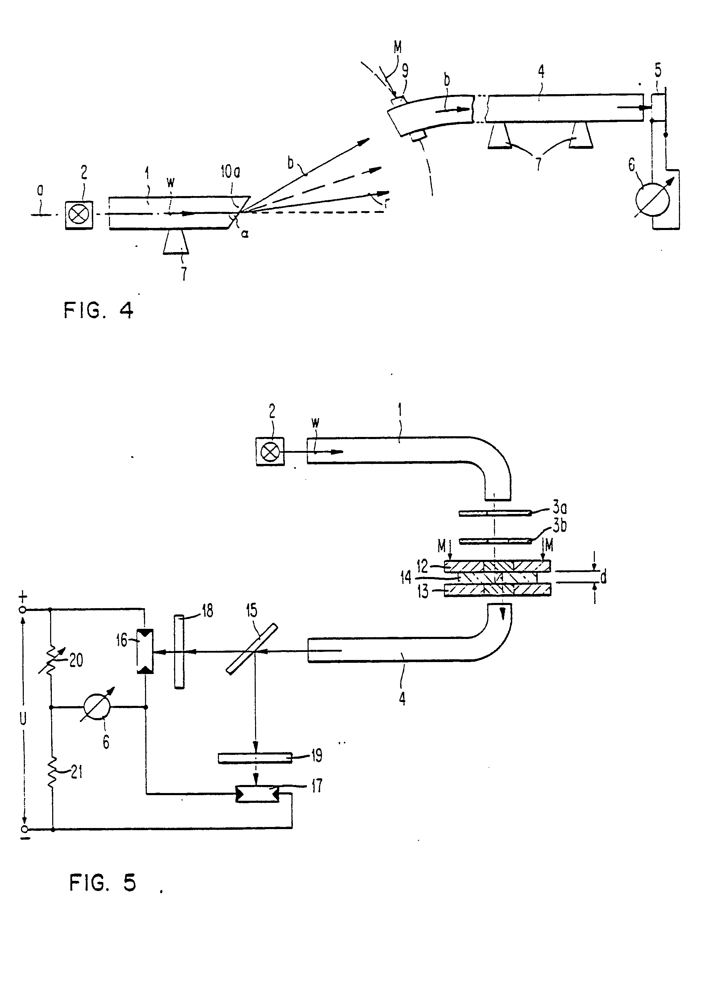

Die Figur 4 zeigt eine Ausführungsform einer faseroptischen Sensoranordnung, die eine Variante der Ausführungsform nach Figur 1 darstellt. Der Hauptunterschied zwischen der Ausführungsform gemäß Figur 1 und der Ausführungsform nach Figur 4 liegt darin, daß in der Ausführungsform nach Figur 4 die spektrale Separation des von der Lichtquelle 2 ausgesandten weißen Lichts durch die Eingangsfaserleitung 1 selbst bewirkt wird. Zu diesem Zweck ist das Ausgangsende oder ausgangsseitige Ende der Eingangsfaserleitung 1 mit einer Endfläche versehen, die mit der Symmetrieachse a einen spitzen Winkel α einschließt. Der Winkel kann etwa 45° betragen. An der Endfläche der Eingangsleitung 1 wird das weiße Licht w in seine Spektralfarben zerlegt. Folglich wirkt das Ausgangsende oder ausgangsseitige Ende der Leitung 1 wie ein Prisma 10a. Das dispergierte Licht das die blaue und rote Komponente b bzw. r enthält, wird zum Eingangsende der Ausgangsfaserleitung 4 geführt. In der gezeigten Stellung erreicht nur die hochfrequentige Komponente b die Eingangsfläche der Ausgangsfaserleitung 4.

Die Eingangsfaserleitung 1 und der hintere Teil der Ausgangsfaserleitung 4 sind durch Halteelemente 7 räumlich fixiert, während der vordere Teil der Ausgangsfaserleitung 4 durch ein Element 9 unter der Einwirkung des Parameters M bewegbar ist. Das Element 9 besteht aus einem das Ende umgebenden Ring und aus einem Stab. Die Bewegung kann auf einem die Endfläche der Eingangsfaserleitung 1 umgebenden Kreis ausgeführt werden. Dadurch empfängt der Lichtdetektor 5 Licht wechselnder Farben.

Allgemein gesprochen zeigt die Figur 4 eine Auführungsform, die zur Erhaltung des Prismeneffekts einen zur Symmetrieachse a schrägen Schnitt am Ausgangsende der ankommenden Faserleitung 1 verwendet. Diese Ausführungsform verwendet weiter eine transversal bewegliche Ausgangsfaser 4 zur selektiven Lichtfrequenzaufnahme, wodurch oder wobei die Bewegung des Endteils oder -abschnitts der Faser 4 auf den zu messenden Parameter M (Druck, Temperatur, Position uzw.) bezogen ist.

Die Figur 5 zeigt eine Ausführungsform, bei der die Frequenzselektion der von der Ausgangsfaserleitung 4 empfangenen Lichtkomponente durch ein Interferenzfilter 12—14 ausgeführt wird. Dieses Interferenzfilter 12—14 kann nach Art eines bekannten Fabry-Perrot-Interferometers ausgebildet sein. Das Interferenzfilter 12—14 besteht im wesentlichen aus zwei planen Quarzplatten 12 und 13 (Fabry-Perrot-Platten), die in einem gewissen Abstand d voneinander und parallel zueinander angeordnet sind. An ihren Außenflächen sind sie mit durch Dampfabscheidung erzeugten, antireflektierenden Überzügen versehen, und ihre einander zugewandten Innenfläche sind verspiegelt. Zwischen den Platten 12 und 13 kann sich Luft oder ein transparentes Kunststoffmaterial 14 befinden. Wenn der Abstand d unter der Einwirkung der zu messenden Quantität M verändert wird, beispielsweise durch einen zwischen den beiden Platten 12 und 13 angeordneten piezoelektrischen oder magnetostriktiven Abstandshalter 14, kann eine Feldstärkenmessung ausgeführt werden.

In einem solchen Interferenzfilter 12—14 finden bei gewissen Wellenlängen Transmissionsmaxima mit sehr kleinen Halbwertsbreiten statt. Diese Wellenlängen werden im wesentlichen durch den Abstand d zwischen den beiden Platten 12 und 13 und durch den Brechungsindex des Mediums zwischen den Platten 12 und 13 bestimmt. Folglich wird nur Licht, das gewisse Wellenlängen aufweist, transmittiert, und die Intensität der roten und blaubven Lichtkomponente ist ein Maß für die transmittierte Wellenlänge und dadurch für den Abstand d zwischen den Platten 12 und 13.

Zur Bestimmung der transmittierten Lichtkomponenten und letzten Endes der Quantität M wird das von der Ausgangsfaserleitung 4 ausgehende Licht über einen Strahlteiler 15 einer ersten und einer zweiten lichtempfindlichen Vorrichtung zugeführt, von denen jede aus einer mit 16 bzw. 17 bezeichneten Fotowiderstands- oder fotoleitenden Zelle oder einem vorangestellten Absorptionsfilter 18 bzw. 19 besteht. Die fotoleitenden Zellen 16, 17 bilden zusammen mit zwei zusätzlichen Widerständen 20, 21 eine Brückenschaltung. Diese Brückenschaltung wird von einer stabilisierten Gleichspannung U versorgt. In der Diagonale der Brückenschaltung ist ein Meßinstrument 6 angeordnet. Dieses Meßinstrument 6 ist als Nullanzeige ausgebildet, so daß neben der Größe auch die Richtung der Quantität M bestimmt werden kann. Der Widerstand 20 ist variabel und erlaubt eine Nulleinstellung auf sehr einfache Weise.

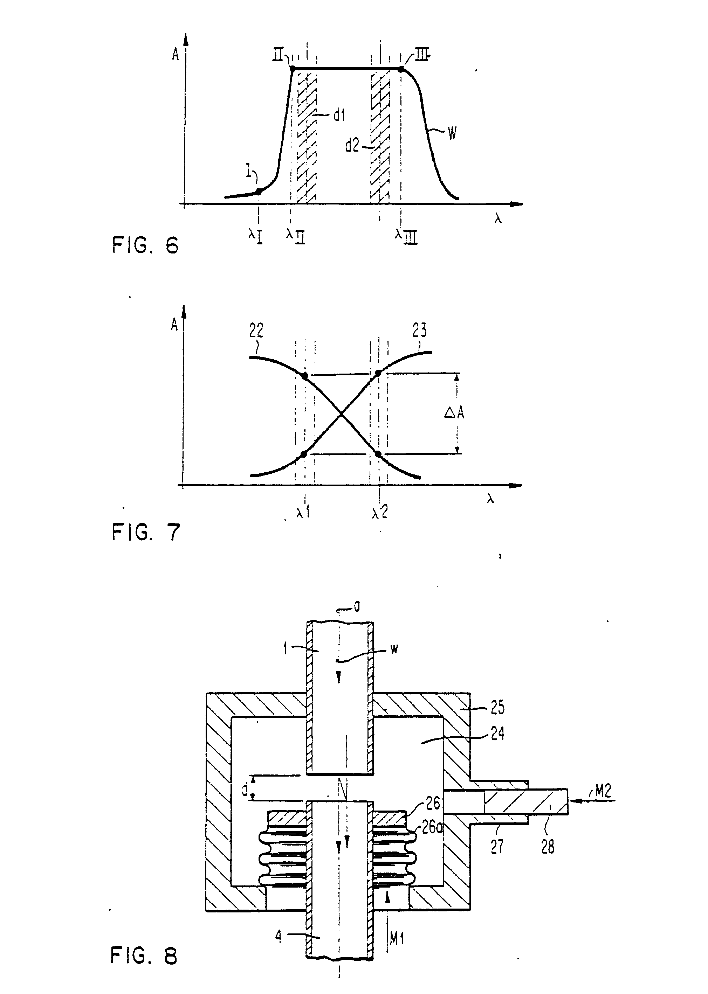

Die Arbeitsweise der in Figur 5 dargestellten Anordnung wird in Verbindung mit den Figuren 6 und 7 erklärt.

In der Figur 6 bezeichnet die Kurve W die Spektralverteilung des von der Lichtquelle 2 ausgesandten Lichts. Die Amplitude der ausgesandten Lichtwellenkomponenten, die eine Wellenlänge aufweisen, die kleiner ist als eine Wellenlänge $\lambda_I$ ist vernachlässigbar klein. Lichtwellenkomponenten einer Wellenlänge zwischen den Wellenlängen $\lambda_{II}$ und $\lambda_{III}$ weisen eine im wesentlichen konstante maximale Amplitude auf. Von der Wellenlänge $\lambda_{III}$ an findet mit wachsender Wellenlänge einer schneller Abfall der Intensität bei den entsprechenden Lichtkomponenten statt. Es sei angenommen, daß unter der Wirkung der zu messenden Quantität der gegenseitige Abstand d der beiden planparallelen Platten 12 und 13 des Interferenzfilters 12—14 voneinander sich zwischen einem Minimalwert d1 und einem Maximalwert d2 ändert. Dementsprechend transmittiert das Interferenzfilter 12—14 in diesen Positionen d1 und d2 Licht aus den entsprechenden markierten Spektralbereichen, die in der Figur 6 durch Schraffur gekennzeichnet sind.

In der Figur 7 gibt die Kurve 22 die relative spektrale Empfindlichkeit A als eine Funktion der Wellenlänge λ für die erste Empfangseinrichtung an, die aus dem Absorptionsfilter 18 und der fotoleitenden Zelle 16 besteht. Die Kurve 23 gibt die relativ spektrale Empfindlichkeit A als Funktion der Wellenlänge λ für die zweite Empfangs-

einrichtung an, die aus dem Absorptionsfilter 19 und der fotoleitenden Zelle 17 besteht. Durch geeignete Wahl der Absorptionsfilter 18 und 19 und der fotoleitenden Zellen 16 und 17 kann erreicht werden, daß im spektralen Bereich zwischen $\lambda_1$ und $\lambda_2$, die den Abständen d1 bzw. d2 entsprechen, die Empfindlichkeitskurven 22 und 23 und folglich die Widerstandswerten der zugeordneten fotoleitenden Zellen 16 bzw. 17 linear und was noch wichtiger ist, einander entgegengesetzt mit der Wellenlänge $\lambda$ variieren. Die Empfangseinrichtung können so gewählt werden, daß eine symmetrische relative Lage der Empfindlichkeitscharakteristiken 22 und 23 vorhanden ist. Durch Variation des Abstandes d zwischen den planparallelen Platten 12 und 13 vom Wert d1 zum Wert d2 variiert der Widerstand jeder der beiden fotoempfindlichen Zellen 16 und 17 um einen Maximalwert, welcher der Empfindlichkuitsänderung $\Delta A$ entspricht. Wenn die fotoempfindlichen Zellen 16 und 17 in einer Brückenschaltung angeordnet sind, wird diese Widerstandsänderung zweimal ausgeführt und hat eine größere Auslenkung des Meßinstruments 6 zur Folge.

Zur vollen Ausnutzung des linearen Teils des Empfindlichkeitskurven 22, 23 der zwei Lichtempfangseinrichtungen und zur Unterdrückung sekundärer Maxima des Interferenzfilters, kann es zweckmäßig sein, ein in Figur 5 nicht dargestelltes Filter für das von der Lichtquelle 2 ausgestrahlte Licht zu verwenden.

Figur 8 zeigt eine Ausführungsform, die ein besonders einfache Konstruktion eines Interferenzfilters aufweist. Die einander zugewandten reflektierenden Flächen bestehen hier aus der ausgangsseitigen Endfläche der Eingangsfaserleitung 1 und der eintrittsseitigen Endfläche der Ausgangsfaserleitung 4. Diese Endflächen sind planparallel zueinander angeordnet. Sie können teilweise mit einer Schicht aus einer lichtreflektierenden Substanz überzogen sein. In dem Spalt kann ein elastisches Medium angeordnet sein. Diese Medium kann optisch dichter sein als die Leitungen 1 und 4. Es kann aus irgendeiner der wohlbekannten, in Fabry-Perrot-Interferometern benutzten Substanzen bestehen, beispielsweise aus Öl. Die beiden Faserleitungen 1 und 4 erstrekken sich bis zum Inneren eines vollständig geschlossenen Gehäuses 25, welches mit einem gasförmigen Medium 24 gefüllt ist. Die Eingangsfaserleitung 1 ist mit dem Gehäuse 25 fest verbunden, wo hingegen die Ausgangsfaserleitung 4 längs ihrer Symmetrieachse a unter dem Einfluß einer zu messenden Quantität M1 bewegbar ist. Diese Beweglichkeit wird durch eine Befestigungs- oder Endplatte 26 und einem elastischen Balg 26a erreicht. Der Balg 26a ist mit einem seiner Enden an der Platte 26 und mit seinem anderen Ende an dem Gehäuse 25 befestigt.

Gesetzt den Fall, daß jede Änderung der Quantität M1 eine proportionale Änderung des Abstandes d zwischen den Faserleitungen 1 und 4 bewirkt, so ist die durch dieses Filter transmittierte Lichtwellenlänge proportional zu der zu messenden Quantität M1. Bis hierher entspricht die Funktion dieser Ausführungsform jener der Figur 5.

In der Anordnung nach Figur 8 ist angenommen, daß eine zusätzliche Quantität oder ein zusätzlicher Parameter M2 die Wellenlänge des durch das Filter hindurchgegangenen Lichts beeinflußt. Dazu ist an dem Gehäuse 25 ein zylindrisches Rohrstück 27 vorgesehen, in dessen Öffnung in Bolzen oder Kolben, insbesondere spielfrei, gleiten kann. Eine Bewegung dieses Kolbens 28 unter der Einwirkung der Quantität M2 hat eine Druckveränderung des gasförmigen Mediums 24 im Inneren des Gehäuses 25 zur Folge. Da der Brechungskoeffizient des gasförmigen Mediums mit dessen Dichte variiert, haben Druckänderungen im Inneren des Gehäuses 25 entsprechende Änderungen des Brechungsindex zur Folge. Dementsprechend hängt die Wellenlänge des transmittierten Lichtes von beiden Quantitäten M1 und M2 ab. Die Quantitäten sind vorzugsweise durch Drücke repräsentiert.

Ein Vorteil der Ausführungsform nach Figur 8 liegt darin, daß sie einfacher auf einer optischen Basis arbeitet. Sie erlaubt die Messung eines absoluten Druckes M1, wenn die Quantität M2 konstant gehalten wird.

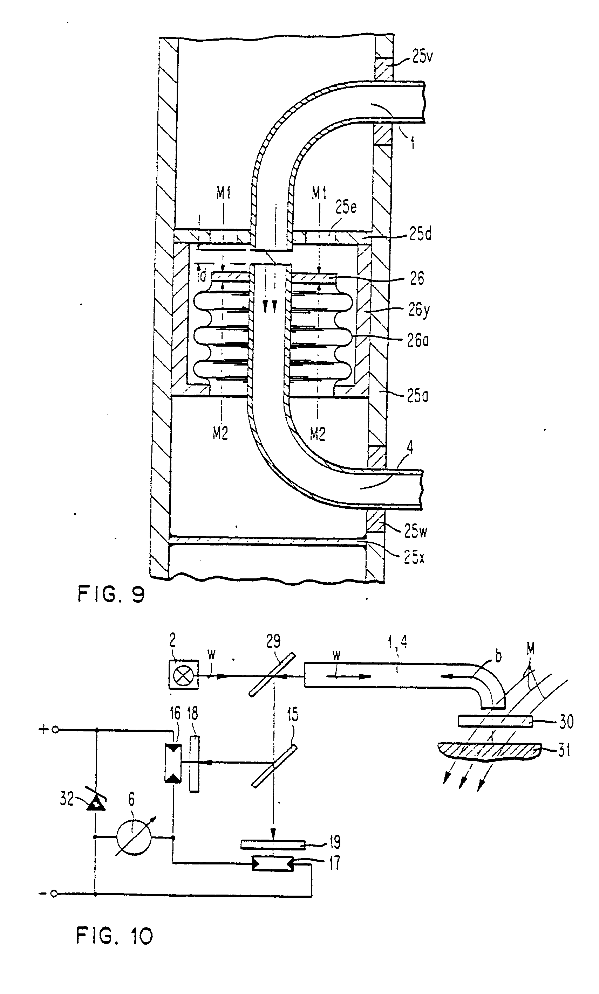

In der Figur 9 ist eine Meßvorrichtung dargestellt, welche zum Messen der Differenz M1—M2 zweier Drücke M1, M2 verwendet werden kann. In dieser Ausführungsform ist das Gehäuse 25a ein Rohr. Im oberen Ende des Rohres 25a herrscht der Druck M1. Eine Scheibe oder Platte 25b, die von mehreren Löchern durchbrochen ist, ist im Rohr 25a befestigt. Die erste faseroptische Übertragungsleitung 1 erstreckt sich in dem unteren Teil des Rohres 25a. Sie ist darin durch ein oberes druckdichtes Wandelement 25v befestigt. Das Ausgangsende der Leitung 1 ist in einem Loch befestigt, das in dem zentralen Teil der Scheibe 25d angeordnet ist. Dieses Ende stellt das fixierte Ende der Meßanordnung dar.

Das bewegliche Ende der Meßanordnung ist durch das Lichteintrittsende der zweiten faseroptischen Übertragungsleitung 4 dargestellt. Diese Endfläche ist gegenüber der zuerst erwähnten Endfläche mittels eines beweglichen Teiles oder einer beweglichen Platte 26 angeordnet. Die Platte 26 ist dicht oder dichtend am oberen Ende eines Balgs 26 befestigt, dessen unteres Ende an der Innenwand des Rohres 25a mit Hilfe eines ringförmigen Körpers 26y befestigt ist. Das flexible Ende der zweiten faseroptischen Übertragungsleitung 4 ist in das innere des Rohres 25a eingeführt, und zwar durch ein unteres druckdichtes Wandelement 25d im unteren Teil des Rohres 25a. Es sei darauf hingewiesen, daß das Eintrittsende der zweiten Leitung 4 in Bezug auf das Austrittsende der ersten Leitung 1 senkrecht bewegbar ist. Der Abstand d des Spaltes zwischen diesen Enden hängt von der Druckdifferenz M1—M2 ab. Wie in den Ausführungsformen nach Figur 5 und Figur 8, hängt die transmittierte Wellenlänge von der Differenz d ab. Im Inneren des Rohres 25a kann, wie im unteren Teil der Figur 9 angedeutet, ein Abdeckelement oder eine Abdeckscheibe 25x vorgesehen sein. Dieses Abdeckelement 25x bildet zusammen mit der Wand des unteren Rohrabschnitts, der Wand des Balges 26a und der Platte 26 eine vakuumdichte Kammer. Diese Kammer enthält einen Bezugsdruck M2. Der Bezug M2 kann entweder 0 (evakuierte Kammer) sein oder einen vorbestimmten, von O verschiedenen Wert aufweisen. In diesem Fall mißt die Meßanordnung den Differenzdruck M1—M2, d.h. den Druck, der den Bezugsdruck M2 übersteigt.

Figur 10 zeigt eine Ausführungsform, in welcher die Eingangsfaserleitung 1 und die Ausgangsfaserleitung 4 so kombiniert sind, daß sie eine einzige Faserleitung 1, 4 bilden. Dementsprechend ist nur eine Übertragungsleitung erforderlich. Das von der Lichtquelle 2 ausgestrahlte Licht w durchstrahlt einen teildurchlässigen Spiegel 29 in der Übertragungsleitung 1, 4 und dann ein Abtastelement, beispielsweise einen Flüssigkristall 30. Der Kristall 30 ist dem Einfluß eines Magnetfeldes ausgesetzt, das die zu messende Quantität M darstellt. Die Wirkung des magnetischen Feldes ist so, daß die Farbe des den Flüssigkristall 30 durchstrahlenden Lichts sich beispielsweise von weiß nach blau b ändert. Das den Flüssigkristall 30 durchstrahlende Licht trifft auf einen Spiegel 31 und wird von dort in die Faserleitung 1, 4 zurückreflektiert. Das zurückkehrende und von dem halbdurchlässigen Spiegel 29 reflektierte Licht b trifft auf einen Strahlteiler 15. Die weitere Auswertung kann exakt so erfolgen, wie bei der Ausführungsform gemäß Figur 5. In der Figur 10 ist jedoch eine etwas einfachere Lichtdetektoranordnung dargestellt. In dieser Detektoreinrichtung bilden die beiden fotoleitenden Zellen einen Spannungsteiler, der von einer durch eine Zehnerdiode 32 stabilisierte Spannung beaufschlag ist. Das Meßinstrument 6 mißt die Spannung der fotoleitenden Zelle 17.

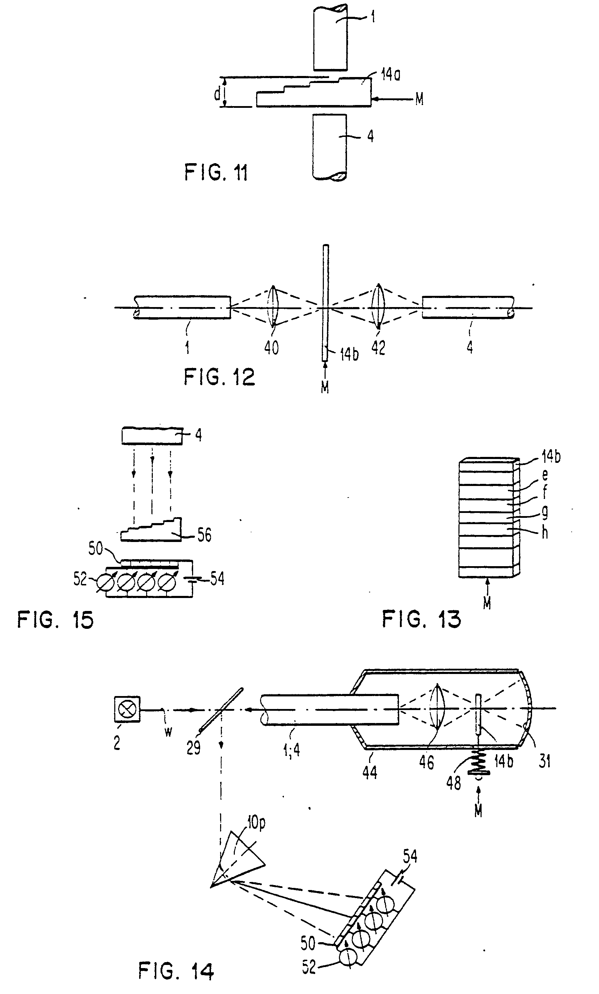

Ein mit einem Spalt zwischen zwei optischen Übertragungs leitungen 1 und 4 in Richtung des Lichtstrahls bewegliches Interferenzfilter 12, 14 ist in der Figur 5 dargestellt. Es ist jedoch auch möglich, das Interferenzfilter so auszubilden, daß die Bewegung in einer zum Lichtstrahl vertikalen Richtung erfolgt. In einem solchen Interferenzfilter sollte der Abstand d variieren. Ein vertikal bewegliches Interferenzfilter ist in der Figur 11 gezeigt.

Nach Figur 11 ist ein transparentes Medium 14a zwischen den Leitungen 1 und 2 angeordnet. Dieses Medium 14a enthält eine Anzahl von Stufen. Anders ausgedrückt: Die Dicke des Mediums wird von Stufe zu Stufe größer. In Abhängigkeit von dem Parameter M und dem entsprechend von der Position des Mediums 14a bestimmt jede dieser Stufen den optisch effektiven oder optischen Abstand d. Die dargestellte Ausführungsform, die eine vertikale Verschiebungsmöglichkeit aufweist, kann dort gewählt werden, wo Raumprobleme herrschen.

Es ist auch möglich, anstelle eines Interferenzfilters mit einem gestuften Medium 14a (siehe Figur 11) ein Absorptionsfilter zu verwenden, um eine Wirkung eines Parameters M senkrecht zum abtastenden Lichtstrahl zu erreichen. Eine derartige Lösung kann billiger sein, als jene Lösungen nach den Figuren 1 und 11.

Sensoranordnungen mit Absorptionsfiltern 14b im Spalt zwischen den Übertragungsleitungen 1 und 4 sind in den Figuren 12 und 14 dargestellt. In beiden Fällen ist das Absorptionsfilter 14b senkrecht zur Hauptrichtung des in den Spalt eintretenden Lichtstrahls beweglich. In Figur 12 ist das Absorptionsfilter 14a zwischen zwei Linsen 40 und 42 angeordnet, die zur Fokussierung des auftreffenden Lichtstrahls bzw. zum Sammeln des transmittierten Lichtstrahls vorgesehen sind.

Das Absorptionsfilter 14b kann, wie in Figur 13 angedeutet, aus einer gewissen Anzahl von Abschnitten e, f, g, h bestehen, von denen jeder für Licht einer gewissen Wellenlänge durchlässig ist. Deshalb repräsentieren verschiedene Abschnitte e, f, g, h verschiedene Farben im optischen Spektrum einer weißes Licht abstrahlenden Lichtquelle. Wie angedeutet, können mehrere unterschiedliche Farbstufen vorgesehen sein. Im Gegensatz dazu können sich die Farben des Absorptionsfilters 14b (nicht dargestellt) von Abschnitt zu Abschnitt auch überlappen.

Nack Figur 14 wird ein Absorptionsfilter 14b in einer Anordnung benutzt, die ähnlich der in Figur 10 dargestellten Anordnung ist. Das Filter 14b ist in einem zylindrischen Gehäuse 44 enthalten. Das Austritts- oder Ausgangsende der kombinierten faseroptischen Leitung 1, 4 ist in dem Gehäuse 44 aufgenommen. Licht aus dem Austrittsende wird durch eine Linse 46 als konvergenter Strahl auf das Filter 14b gerichtet. Das Filter 14b ist unter dem Einfluß eines Parameters M senkrecht zu der durch Pfeile angedeuteten Hauptrichtung des Lichtes verschiebbar. Der Aufwärtsbewegung des Filter 14b wirkt eine Feder 48 entgegen. Das Licht einer gewissen, vom Filter 14b transmittierten Farbe wird von einer inneren Endfläche des Gehäuses 44 reflektiert. Diese Endfläche ist gewölbt und wirkt als ein Reflektor 31. Das Licht wird durch das Absorptionsfilter 14b und die Linse 46 in die Transmissionsleitung 1, 4 zurückreflektiert. Schließlich wird das Licht mittels eines halbdurchlässigen Speigels 29 in Richtung eines Prismas 10p gelenkt.

Das Prisma 10p ist Teil eines frequenzempfindlichen Detektors. Es lenkt das ankommende Licht in Richtung eines Feldes 50 aus lichtempfindlichen Elementen ab. Jedes dieser Elemente kann mit einem Meßinstrument 52 oder einer anders gearteten Auswertevorrichtung elektrisch verbunden sein. In der Ausführungsform nach Figur 14 sind alle Teile und Komponenten, einschließlich des Prismas 10p und der einzelnen empfindlichen Elemente des Feldes 50 fixiert. Dies ist ein besonderer Vorteil.

In den Ausführungsformen nach den Figuren 5 und 10 sind Absorptionsfilter als Diskriminatoren 18 und 19 in Kombination mit fotoleitenden Zellen 16 und 17 benutzt worden. Anstelle dessen wird nach Figur 14 das Absorptionsfilter 14b in Kombination mit einem Prisma 10p benutzt. Diese Ausführungsform weist deshalb einen weiteren besonderen Vorteil auf. Das einfarbige Licht, welches das Prisma 10p aus dem beweglichen Filter 14b erreicht, kann ein sehr feines Lichtstrahlenbündel sein. Dieses Lichtstrahlen- oder Lichtbündel wird auf dem Feld 50 entsprechend der Verschiebung des Filters 14b verschoben. Während einer solchen Bewegung kann der elektrische Widerstand eines optischen Sensors 50 entsprechend der Position des Lichtstrahls und wie in Figur 17 angedeutet, geändert werden. In der in Figur 14 dargestellten Lösung wird das Feld 50 als ein digitaler Gray-Skalen-Diskriminator benutzt, der im Zusammenhang mit Figur 16 erklärt wird.

In der Figur 15 ist eine andere Form einer lichtabtastenden Vorrichtung oder Einrichtung dargestellt. Anstelle eines Filters 18 oder 19 weist diese Vorrichtung ein gestuftes Interferenzfilter 56 in einer fixierten Position auf. Dieses Interferenzfilter 56 kann kleiner als das Filter 14a in der Figur 11 sein.

Es ist an dem Austrittsende der Übertragungsleitung 4 (Figuren 1 und 5) oder im Lichtweg oder Strahlengang hinter dem halbdurchlässigen Spiegel 29 (Figur 10) angeordnet. In diesem Fall kann auch oder ebenfalls ein Feld 50 aus individuellen Detektoren als fotoempfindliche Ein- oder Vorrichtung verwendet werden. Jeder der einzelnen Detektoren ist hier einer Stufe des Filters 56 zugeordnet. Meßinstumente oder Datenverarbeitungseinrichtungen liefern eine Auswertung der gemessenen Werte.

In der Figur 16 ist ein Feld 50 oder Gray-Skalen-Diskriminator mehr im Detail dargestellt. Der Gray-Skalen-Diskriminator besteht aus mehreren Zeielen aus lichtempfindlichen Diodes D10, D20, D24, ..., D36 oder anderen optischen Sensoren (wie beispielsweise Fotowiderständen) und aus freien Räumen zwischen diesen. In der ersten Zeile sind die Diode D10 und ein Freiraum angeordnet. In der zweiten Reihe sind die Diode D20, ein Freiraum, die Diode D24 und ein weiterer Freiraum angeordnet. In der dritten Zeile sind die Diode D30, ein Freiraum, die Diode D32, ein anderer Freiraum, die Diode D34, ein anderer Freiraum, die Diode D36 und ein weiterer Freiraum angeordnet. Die Dioden D10—D36 sind durch Widerstände R10, R20, ... bzw. R36 an eine oder mehrere Spannungsquellen angeschlossen, welche die Spannung U aufweist, bzw. aufweisen. Die an den Widerständen R10 ... R36 abgegriffenen Signale werden ausgewertet. Dementsprechend liefert die erste Zeile insgesamt zwei Ziffern oder Zahlen, die nächste Reihe insgesamt vier Zahlen, usw.. Wenn der dünne Lichtstrahl oder Fächer von der rechten Seite beginnend über das Feld 50 in der Richtung des Pfeils 60 sich bewegt, finden verschiedene Kombinationen belichteter Dioden D10, D36 statt. Beim Beginn am rechten Ende wird keine der Diode D10 bis D36 betroffen. Wenn sich der Strahl weiterbewegt, empfängt zuerst die Diode D36 Licht. Im folgenden wird die Diode D24 betroffen. Dann werden die beiden Dioden D24 und D34 belichtet. Schließlich werden auf der linken Seite des Feldes 50 alle drei Dioden D10, D20 und D30 Licht aus dem Lichtfächer empfangen.

Wenn sich folglich der Lichtfächer weiterbewegt werden unterschiedliche Kombinationen belichteter Dioden (D10—D36) verschiedene Zahlen oder Ziffernkombinationen zur Folge haben. Diese Ziffern können mittels eines Paralle-/Serienschieberegisters oder einer ähnlichen Vorrichtung weiterverarbeitet werden.

Aus der Figur 17 ist zu entnehmen, daß es anstelle der Anordnung der in der Figur 16 gezeigten Dioden D10—D36 möglich ist, einfache Dioden- oder Widerstandsstreifen P10, P20, P30, ... zu verwenden, und den Digitalisierungseffekt durch einen Belag 62, der das in Figur 16 dargestellte Muster aufweist. Die Figur 17 zeigt, daß die variierenden Kombinationen von Widerstandswerten an eine Auswertungsschaltung 64 gegeben werden können, die ein Schieberegister enthält. Dieses Schieberegister ist grundsätzlich ein Speicherelement. Daten werden in dieses Element parallel eingelesen und in Serie ausgelesen. Die Anordnung nach Figur 17 kann in Verbindung mit der Anordnung nach Figur 14 verwendet werden, d.h. daß ein Reflektor 31 und eine kombinierte Faserleitung 1, 4 zur Ein- und Ausgabe das abtastenden Lichtstrahls verwendet wird.

Oft wird eine große Anzahl optischer Sensoren oder Übertrager für elektronische Steuersysteme benötigt. Solche Systeme können es erfordern, ebensoviele Lichtfaserleitungen von den individuellen Meßpunkten bis zu einer zentralen Verarbeitungsstation zu installieren, wie Meßpunkte vorhanden sind. In den Figuren 18 und 20 ist dargestellt, daß in einem solchen Fall die Anzahl der optischen Übertragungsleitungen beträchtlich reduziert werden kann, wenn die Prinzipien der erfindungsgemäßen Lichtfrequenzmodulation und Multiplexverfahren verwendet werden.

In der Figur 18 strahlt die Lichtquelle einer Lichtquelle 2 Licht eines breiten Spektrums aus. Das Licht tritt in eine Lichtsammelleitung 33 durch einen teil- oder halbdurchlässigen Spiegel 15 ein. Das Licht läuft dann über sogenannte T-Koppler 34 zu optischen Übertragern 85e—85h, von denen jeder an einem Ende einer einzelnen Faserleitung angeordnet ist, die von den T-Kopplern 34 abzweigt. Jeder dieser Übertrager 85e—85h kann beispielsweise ein frequenzselektives Filter, wie beispielsweise das in Figur 5 gezeigte Fabry-Perrot-Filter 12 bis 14 oder das in Figur 10 gezeigte Filterelement 30 aufweisen, dem ein Reflektor oder Spiegel nachgeordnet ist, beispielsweise der Reflektor 31 in der Anordnung gemäß Figur 10. Das reflektierte Licht läuft über die T-Koppler 34 und den Spiegel 15 zurück, trifft auf ein dispergierendes Prisma 10 und von dort auf vier Lichtempfangseinrichtungen 86E, 86H, die aus Fotodioden bestehen können. Sie können auch ähnlich wie die in den Figuren 10 dargestellten Lichtabtasteinrichtungen konstruiert sein. Bei dieser Ausführungsform kann anstelle des Prismas 10 eine Anzahl sekundärer Filter zum Trennen verschiedener Wellenlängenkomponenten vor Messung deren Intensitäten vorgesehen sein.

Die Kurve W in Figur 19 stellt die Spektralverteilung des von der Lichtquelle 2 ausgestrahlten Lichtes dar.

Das ausgestrahlte Licht weist ein relativ weites Spektrum auf. Aufgrund einer geeigneten Auslegung oder Konstruktion ihrer Filter sind die individuellen Empfangseinrichtungen 86e—86h nur für in Figur 19 mit E—H bezeichnete und entsprechend zugeordnete Spektralbereiche transparent. Demzufolge ist die Empfangseinrichtung 86E nur für den Spektralbereich E, die Empfangseinrichtung 86F nur für den Spektralbereich F, usw. transparent. Die Kurven e—h im oberen Teil der Figur 19 repräsentieren auf einem stark reduzierten Ordinatenmaßstab die spektralen Empfindlichkeiten der individuellen Übertrager 85e—85h, die ein frequenzselektives Filter enthalten. Ihre Übertragungsbandbreiten entsprechen annähernd jenen, der zugeordneten Empfangseinrichtungen 86E—86H. Diese Übertragungs bänder können unter dem Einfluß von Parametern Me, Mf, Mg, Mh verschoben werden, beispielsweise in der in der Figur 5 dargestellten Weise. Die Übertragungsbereich des frequenzselektiven Filters und der zugeordneten Empfangseinrichtung überlappen sich und der Überlappungsgrad hängt von dem Einfluß der gemessenen Quantität Me, Mf, Mg bzw. Mh ab. Nur Lichtkomponenten entsprechender Größe werden von den Empfangseinrichtungen 86e, 86f, 86g, bzw. 86h empfangen.

Die Farbmultiplexeinrichtung gemäß Figur 18 kann zur Messung verschiedener Parameter in einem Kraftfahrzeug verwendet werden.

Die Figur 20 zeigt eine zweite Ausführungsform eines optische Multiplexbetriebes, in dem ein sogenannter Stern-Koppler 87 verwendet ist. Das von der Lichtquelle 2 ausgesandte Licht w, das ein sehr breites Frequenzband umfaßt, gelangt in eine Eingangsfaserleitung 1 für Licht, die als Kollektorleitung dient.

In dem Sternkoppler 87 verzweigt sich diese Leitung 1 in Faserleitungen für Licht, die zu individuellen Transmittern 85e, 85f, 85g, usw. führen, von denen jeder ein frequenzselektives Filter aufweist und jeder auf einen zugeordneten Parameter Me, Mf, Mg anspricht. In dem Sternkoppler 87 werden die zurückkommenden Lichtkomponenten in eine gemeinsamen Ausgangsfaserleitung 4 für Licht eingekoppelt. Diese Komponenten werden zu den Lichtempfangseinrichtungen 86E, 86F, 86G, usw. geleitet, wie in der Anordnung gemäß Figur 18.

Die grundlegende Struktur der in den Figuren 18 und 20 dargestellten optischen Neztwerke kann auch mit jeder oder jedem anderen kombiniert werden. So können beispielsweise fünft der in der Figur 18 dargestellten optischen Netzwerke durch einen Sternkoppler 87 gemäß Figur 20 angeregt werden. Dadurch können zwanzig optische Transmitter verwendet werden.

**Patentansprüche**

1. Faseroptische Sensorvorrichtung zum Messen eines physikalischen Parameters, mit einer mehrere Spektralfarben aussendenden Lichterzeugungseinrichtung (2), mit einer optischen Faserleitung (1) zum Übertragen der Spektralfarben zu einer das zugeleitete Licht in Abhängigkeit von dem physikalischen Parameter beeinflussenden optischen Modulatoreinrichtung und mit einer Detektoreinrichtung (16, 17; 50; 86E bis 86H) mit einem Detektorfenster, dem das von der Modulatoreinrichtung beeinflußte Licht zugeleitet ist, dadurch gekennzeichnet, daß die Modulatoreinrichtung als eine spektralselektive Modulatoreinrichtung ausgebildet ist, daß die Detektoreinrichtung für die verschiedenenen Spektralfarben verschieden empfindlich ausgebildet ist und daß die spektralselektive Modulatoreinrichtung dem Detektorfenster der Detektoreinrichtung eine bestimmte, in Abhängigkeit von dem zu messenden physikalischen Parameter sich ändernde Spektralfarbe zuleitet.

2. Vorrichtung nach Anspruch 1, dadurch gekennzeichnet, daß die spektralselektive Modulatoreinrichtung ein zwischen der einen optischen Faserleitung (1) und einer zum Detektorfenster führenden weiteren optischen Faserleitung (4) angeordnetes Prisma (10) aufweist, welches das aus der einen Faserleitung (1) zugeleitete Licht in seine Spektralfarben zerlegt, daß ein Ende der weiteren Faserleitung (4) im Strahlengang des zerlegten Lichts so angeordnet ist, daß eine bestimmte Spektralfarbe in diese andere Faserleitung einkoppelt, wenigstens eine andere Spektralfarbe dagegen nicht, und daß das Prisma (10) in Abhängigkeit von dem zu messenden physikalischen Parameter um eine zu seiner brechenden Kante parallele Achse (11) verdrehbar ist.

3. Vorrichtung nach Anspruch 2, dadurch gekennzeichnet, daß im Strahlengang des dem Prisma (10) aus der einen optischen Faserleitung (1) zugeleiteten Lichts eine erste Linse (3c) angeordnet ist, die dem Prisma (10) einen Parallelstrahl zuleitet, daß zwischen dem Prisma (10) und dem einen Ende der weiteren optischen Faserleitung (4) eine zweite Linse (3d) angeordnet ist, welche die bestimmte Spektralfarbe auf das eine Ende der weiteren optischen Faserleitung (4) fokussiert.

4. Vorrichtung nach Anspruch 3, dadurch gekennzeichnet, daß zwischen der ersten und zweiten Linse (3c bzw. 3d) ein Richtungsfilter (3e) angeordnet ist.

5. Vorrichtung nach Anspruch 2, dadurch gekennzeichnet, daß im Strahlengang des aus der einen optischen Faserleitung (1) dem Prisma (10) zugeleiteten Lichts wenigstens eine Aperturblende (3a, 3b) angeordnet ist.

6. Vorrichtung nach Anspruch 1, dadurch gekennzeichnet, daß die Modulatoreinrichtung aus einer an dem von der Lichterzeugungseinrichtung (2) fernen Ende der einen optischen Faserleitung (1) schräg zur Längsachse (a) dieser Faserleitung (1) orgcreheuer und das an diesem fernen Ende austretende Licht in seine Spektralfarben zerlegenden brechenden Stirnfläche (10a) und aus einer Einrichtung (9) besteht, welche die brechende Stirnfläche (10a) und ein im Strahlengang des zerlegten Lichts angeordnetes Ende einer zum Detektorfenster der Detektoreinrichtung (5) führenden weiteren optischen Faserleitung (4) relativ zueinander bewegt.

7. Vorrichtung nach Anspruch 6, dadurch gekennzeichnet, daß das im Strahlengang des zerlegten Lichts angeordnete Ende der weiteren optischen Faserleitung (4) in Bezug auf die unbewegte brechende Stirnfläche (10a) bewegbar ist.

8. Vorrichtung nach Anspruch 1, dadurch gekennzeichnet, daß die spektralselektive Modulatoreinrichtung aus einem im Strhalengang des aus der einen optischen Faserleitung (1) austretenden Lichts angeordneten variierbar wellenlängenselektiven Filter besteht, dessen Durchlässigkeit in Abhängigkeit von dem zu messenden physikalischen Parameter variierbar ist.

9. Vorrichtung nach Anspruch 8, dadurch gekennzeichnet, daß das variierbar wellenlängenselektive Filter aus einem Interferenzfilter mit zwei einander gegenüberliegenden und von dem in der einen optischen Faserleitung (1) zugeleiteten Licht durchsetzten brechenden Flächen besteht, die in einem geringen Abstand (d) voneinander angeordnet sind, der in Abhängigkeit von dem zu messenden physikalischen Parameter variierbar ist.

10. Vorrichtung nach Anspruch 9, dadurch gekennzeichnet, daß die geringem Abstand (d) einander gegenüberliegenden brechenden Flächen auf Platten (12, 13) ausgebildet sind, die im Strahlengang des aus der einen optischen Faserleitung (1) zugeführten Lichts angeordnet sind.

11. Vorrichtung nach Anspruch 9, dadurch gekennzeichnet, daß die in geringem Abstand (d) einander gegenüberliegenden brechenden Fläche aus einander gegenüberliegenden Stirnflächen der einen und einer weiteren optischen Faserleitung (1, 4) gebildet sind.

12. Vorrichtung nach Anspruch 11, dadurch gekennzeichnet, daß Endabschnitte der einen und der weiteren optischen Faserleitung (1, 4), welche die einander gegenüberliegenden Stirnfläche enthalten, in ein Gehäuse (25; 25d, 26y) ragen, daß ein Endabschnitt in einer Wand des Gehäuses fixiert ist, während der andere Endabschnitt an einem beweglichen Teil (26) befestigt ist, das in Abhängigkeit von einer Druckdifferenz zwischen der Innen- und Außenseite des Gehäuses in längsaxialer Richtung der Endabschnitte bewegbar ist, und daß eine Einrichtung (27, 28; 25a) zum Erzeugen einer variablen Druckdifferenz zwischen der Innen- und Außenseite des Gehäuses vorgesehen ist.

13. Vorrichtung nach Anspruch 12, dadurch gekennzeichnet, daß das bewegliche Teil (26) durch einen Balg (26a) mit einer Öffnung des Gehäuses verbunden ist, durch welches der an dem beweglichen Teil (26) befestigte Endabschnitt geführt ist.

14. Vorrichtung nach Anspruch 12 oder 13, dadurch gekennzeichnet, daß die Einrichtung (27, 28) zur Erzeugung der Druckdifferenz einen in einer Öffnung (27) in der Wandung des Gehäuses (25) geführten Kolben (28) aufweist.

15. Vorrichtung nach einem der Ansprüche 12 bis 14, dadurch gekennzeichnet, daß die Einrichtung zur Erzeugung der Druckdifferenz ein Rohr (25a) umfaßt, in dem das Gehäuse (25d, 26y) angeordnet ist, daß das Rohr (25a) auf der einen Seite des Gehäuses verschlossen (bei 25x) ist, daß auf der anderen Seite des Gehäuses ein Druck im Rohr erzeugbar ist, und daß auf dieser anderen Seite des Gehäuses zumindest eine Öffnung (25e) in der Wandung (25d) des Gehäuses ausgebildet ist.

16. Vorrichtung nach Anspruch 9, dadurch gekennzeichnet, daß das Interferenzfilter aus einer gestuften Platte (14a, 56) besteht, deren Dicke (d) von Stufe zu Stufe variiert, wobei in jeder Stufe die einander gegenüberliegenden Oberflächenbereiche der Platte die einander gegenüberliegenden und von dem in der einen optischen Faserleitung (1) zugeleiteten Licht durchsetzten brechenden Flächen bilden, die in dem geringen Abstand (d) voneinander angeordnet sind, und daß zur Variation dieses Abstands (d) die gestufte Platte in Abhängigkeit von dem zu messenden physikalischen Parameter quer zur Ausbreitungsrichtung des zugeleiteten Lichts verschiebbar ist.

17. Vorrichtung nach Anspruch 8, dadurch gekennzeichnet, daß das wellenlängenselektive Filter aus einem Absorptionsfilter (14b) besteht, das mehrere Bereiche (e bis h) unterschiedlicher Durchlässigkeit aufweist und in Abhängigkeit von dem zu messenden physikalischen Paramter senkrecht zur Ausbreitungsrichtung des aus der einen optischen Faserleitung (1) zugeleiteten Lichts verschiebbar ist.

18. Vorrichtung nach Anspruch 1, dadurch gekennzeichnet, daß die spektralselektive Modulatoreinrichtung aus einem Flüssigkristall (30) besteht, der in Abhängigkeit von einem zu messenden Magnetfeld die Farbe des aus der einen optischen Faserleitung (1) zugeleiteten Lichts verändert.

19. Vorrichtung nach einem der vorhergehenden Ansprüche, dadurch gekennzeichnet, daß die Detektoreinrichtung einen Strahlteiler (15) zum Aufteilen des zugeleiteten Lichts in einen ersten und zweiten Strahl, ein erstes Detektorfenster (16), das den ersten Lichtstrahl empfängt und für eine erste Spektralfarbe empfindlich ist, und ein zweites Detektorfenster (17) umfaßt, das für eine zweite Spektralfarbe empfindlich ist und den zweiten Lichtstrahl empfängt.

20. Vorrichtung nach Anspruch 19, dadurch gekennzeichnet, daß die Detektorfenster (16, 17) Fenster von elektrischen Lichtdetektoren sind, die in einer Wheatstoneschen Brücke angeordnet sind.

21. Vorrichtung nach Anspruch 19 oder 20, dadurch gekennzeichnet, daß jedem Detektorfenster (16, 17) ein Lichtfilter (18 bzw. 19) vorgeordnet ist.

22. Vorrichtung nach einem der vorhergehenden Ansprüche dadurch gekennzeichnet, daß die Detektoreinrichtung ein Feld (50; 86E bis 86H) aus fotoempfindlichen Elementen aufweist.

23. Anwendung einer Vorrichtung nach einem der vorhergehenden Ansprüche in einem Farbmultiplex-Sensorsystem.

**Revendications**

1. Capteur à fibres optiques pour mesurer un paramètre physique, comprenant un dispositif générateur de lumière (2) émettant un spectre à plusieurs couleurs, une ligne à fibre optique (1) pour transmettre les couleurs à un dispositif modulateur optique influançant la lumière incidente en fonction du paramètre physique, ainsi qu'un dispositif détecteur (16, 17; 50; 86E à 86H) présentant une fenêtre à laquelle est amenée la lumière influencée par le dispositif modulateur, caractérisé en ce que le dispositif modulateur est réalisé comme un dispositif modulateur à sélectivité spectrale, que le dispositif détecteur est réalisé pour être différemment sensible aux différentes couleurs du spectre et que le dispositif modulateur à sélectivité spectrale envoie à la fenêtre du dispositif détecteur une couleur déterminée du spectre, qui change en fonction du paramètre physique à mesurer.

2. Capteur selon la revendication 1, caractérisé en ce que le dispositif modulateur à sélectivité spectrale comporte un prisme (10) placé entre ladite ligne à fibre optique (1) et une autre ligne à fibre optique (4) . menant à la fenêtre du détecteur, le prisme décomposant la lumière amenée par ladite ligne à fibre (1) en ses couleurs spectrales, qu'une extrémité de l'autre ligne à fibre (4) est disposée dans le chemin de la lumière décomposée de manière qu'une couleur déterminée du spectre soit injectée dans cette autre ligne à fibre, alors qu'au moins une autre couleur du spectre n'y est pas injectée, et que le prisme (10) est rotatif autour d'une axe (11) parallèle à sa face produisant la réfraction, en fonction du paramètre physique à mesurer.

3. Capteur selon la revendication 2, caractérisé en ce qu'une première lentille (3c) est disposée dans le faisceau amené au prisme depuis ladite ligne à fibre optique (1), lentille qui envoie au prisme (10) un faisceau parallèle et qu'une seconde ligne (3d) est disposée entre le prisme (10) et une extrémité de l'autre ligne à fibre optique (4), la seconde lentille focalisant la couleur déterminée du spectre sur ladite extrémité de l'autre ligne à fibre optique (4).

4. Capteur selon la revendication 3, caractérisé en ce qu'un filtre directionnel (3e) est placé entre la première (3c) et la seconde lentille (3d).

5. Capteur selon la revendication 2, caractérisé en ce qu'au moins un diaphragme à ouverture (3a, 3b) est disposé dans le faisceau de lumière amené depuis ladite ligne à fibre optique (1) au prisme (10).

6. Capteur selon la revendication 1, caractérisé en ce que le dispositif modulateur est constitué d'une face d'extrémité de fibre (10a) réfractive disposée à l'extrémité éloignée du dispositif générateur de lumière (2) de ladite ligne à fibre optique (1), la face extrême étant orientée obliquement par rapport à l'axe longitudinal (a) de cette ligne à fibre (1) et décomposant la lumière émergeant de cette extrémité eloignée en ses couleurs spectrales, ainsi que d'un dispositif (9) qui produit un mouvement relatif entre cette face d'extrémité réfractive (10a) et l'extrémité, disposée dans le faisceau de la lumière décomposée, d'une autre ligne à fibre optique (4), menant à la fenêtre du dispositif détecteur (5).

7. Capteur selon la revendication 6, caractérisé en ce que l'extrémité de l'autre ligne à fibre optique (4), extrémité qui est disposée dans le faisceau de la lumière décomposée, est déplaçable par rapport à la face d'extrémité réfractive (10a), laquelle est immobile.

8. Capteur selon la revendication 1, caractérisé en ce que le dispositif modulateur à sélectivité spectrale est formé par un filtre dont la sélectivé en longueur d'onde est variable, filtre qui est placé dans le faisceau de la lumière émergeant de ladite ligne à fibre optique (1) et dont la transmission est variable en fonction du paramètre physique à mesurer.

9. Capteur selon la revendication 8, caractérisé en ce que le filtre à sélectivité variable en longueur d'onde, est formé d'un filtre d'interférence avec deux faces réfractives mutuellement opposées et traversées par la lumière amenée par ladite ligne à fibre optique (1), faces qui sont espacées l'une de l'autre d'une faible distance (d) qui peut être variée en fonction du paramètre physique à mesurer.

10. Capteur selon la revendication 9, caractérisé en ce que les faces réfractives disposées à faible distance (d) l'une en face de l'autre, sont formées sur des lames (12, 13) placées dans le faisceau de la lumière sortant de ladite ligne à fibre optique (1).

11. Capteur selon la revendication 9, caractérisé en ce que les faces réfractives disposées à faible distance (d) l'une en face de l'autre, sont formées par les faces d'extrémité situées l'une en face de l'autre de ladite ligne à fibre optique (1) et d'une autre ligne à fibre optique (4).

12. Capteur selon la revendication 11, caractérisé en ce que les parties terminales de ladite ligne à fibre optique (1) et de l'autre ligne à fibre optique (4) parties qui présentent les faces d'extrémité opposées, font saillie dans un boîtier (25; 25d, 26y), qu'une partie terminale est fixée dans une paroi du boîtier, tandis que l'autre partie terminale est fixée à une pièce mobile (26) qui est déplaçable dans le sens de l'axe des parties terminales en fonction d'une différence de pression entre l'intérieur et l'extérieur du boîtier, et qu'un dispositif (27, 28; 25a) est prévu pour établir une différence de pression variable entre l'intérieur et l'extérieur du boîtier.

13. Capteur selon la revendication 12, caractérisé en ce que la pièce mobile (26) est reliée par un soufflet (26a) à une ouverture du boîtier à travers de laquelle est guidée la partie terminale de fibre fixée à la pièce mobile (26).

14. Capteur selon la revendication 12 ou 13, caractérisé en ce que le dispositif (27, 28) pour établir la différence de pression comporte un piston (28) guidé dans une ouverture (27) de la paroi du boîtier (25).

15. Capteur selon une des revendications 12 à 14, caractérisé en ce que le dispositif pour établir la différence de pression comprend un tube (25a) dans lequel est disposé le boîtier (25d, 26y), que le tube (25a) est fermé d'un côté du boîtier (en 25x), qu'une pression peut être établie dans le tube, de l'autre côté du boîtier, et que cet autre côté du boîtier présente au moins une ouverture (25e) dans sa paroi (25d).

16. Capteur selon la revendication 9, caractérisé en ce que le filtre d'interférence est formé par une lame à échelons (14a, 56) dont l'épaisseur (d) varie d'un échelon à l'autre, les parties de surface mutuellement opposées de chaque échelon de la lame constituant les faces réfractives opposées qui sont traversées par la lumière amenée par ladite ligne à fibre optique (1) et qui sont placées à faible distance (d) l'une de l'autre, et que, pour varier cette distance (d), la lame à échelons est déplaçable transversalement à la direction de propagation de la lumière incidente en fonction du paramètre physique à mesurer.

17. Capteur selon la revendication 8, caractérisé en ce que le filtre sélectif en longueur d'onde est un filtre d'absorption (14b) qui présente plusieurs zones (e à h) de transmissions différentes et qui est déplaçable perpendiculairement à la direction de propagation de la lumière amenée par ladite ligne à fibre optique (1) en fonction du paramètre physique à mesurer.

18. Capteur selon la revendication 1, caractérisé en ce que le dispositif modulateur à sélectivité spectrale est formé par un cristal liquide (30) qui change la couleur de la lumière amenée par ladite ligne à fibre optique en fonction d'un champ magnétique à mesurer.

19. Capteur selon une des revendications précédentes, caractérisé en ce que le dispositif détecteur comprend un séparateur de faisceau (15) pour partager la lumière incidente en un premier et un second faisceau, une première fenêtre de détecteur (16) qui reçoit le premier faisceau lumineux et est sensible à une première couleur du spectre, ainsi qu'une seconde fenêtre de détecteur (17) sensible à une seconde couleur du spectre et recevant le second faisceau lumineux.

20. Capteur selon la revendication 19, caractérisé en ce que les fenêtres de détecteur (16, 17) sont des fenêtres de photodétecteurs électriques qui sont montées dans un pont de Wheatstone.

21. Capteur selon la revendication 19 ou 20, caractérisé en ce que chaque fenêtre de détecteur (16, 17) est précédée d'un filtre (18 ou 19) pour la lumière.

22. Capteur selon une des revendications précédentes, caractérisé en ce que le dispositif détecteur comporte un panneau (50; 86E à 86H) d'éléments photosensibles.

23. Application d'un capteur selon une des revendications précédentes dans un système de capteurs à multiplexage de couleurs.

**Claims**

1. A fibre-optics sensor for measuring a physical parameter, comprising a light generating device (2) which transmits a plurality of spectral colours, an optical fibre conductor (1) for transmitting the spectral colours to an optical modulator device which influences incident light in dependence upon the physical parameter, and a detector device (16, 17; 50; 86E to 86H) including a detector window supplied with light influenced by the modulator device, characterised in that the modulator device consists of a spectral-selective modulator device, that the detector device is designed to exhibit differing sensitivity to the different spectral colours, and that the spectral-selective modulator device supplies the detector window of the detector device with a specific spectral colour which changes in dependence upon the physical parameter which is to be measured.

2. A sensor as claimed in Claim 1, characterised in that the spectral-selective modulator device includes a prism (10) arranged between the first optical fibre conductor (1) and a further optical fibre conductor (4) leading to the detector window, which selectively splits the incident light from the first fibre conductor (1) into its spectral colours, that one end of the further fibre conductor (4) is arranged in the path of the dispersed light beam components such that one specific spectral colour is coupled into this other fibre conductor, whereas at least one other spectral colour is not, and that in dependence upon the physical parameter to be measured the prism (10) can be rotated about an axis (11) parallel to its refracting edge.

3. A sensor as claimed in Claim 2, characterised in that a first lens (3c) is arranged in the beam path of the light supplied to the prism (10) from the first optical fibre conductor (1) to supply the prism (10) with a parallel beam, and that between the prism (10) and the first end of the further optical fibre conductor (4) a second lens (3d) is arranged to focus the specified spectral colour onto the first end of the further optical fibre conductor (4).

4. A sensor as claimed in Claim 3, characterised in that a directional filter (3e) is arranged between the first and second lenses (3c and 3d).

5. A sensor as claimed in Claim 2, characterised in that at least one apertured diaphragm (3a, 3b) is arranged in the beam path of the light supplied to the prism (10) from the first optical fibre conductor (1).

6. A sensor as claimed in Claim 1, characterised in that the modulator device consists of a refracting end face (10a) arranged at that end of the first optical fibre conductor (1) remote from the light generating device (2), obliquely to the longitudinal axis (a) of this fibre conductor (1), to split up the light emerging at this remote end into its spectral colour components, and consists of a device (9) by which the refracting end face (10a) and one end of a further optical fibre conductor (4) arranged in the beam path of the split-up light and leading to the detector window of the detector device (5) are moved relative to one another.

7. A sensor as claimed in Claim 6 characterised in that that end of the further optical fibre conductor (4) arranged in the beam path of the split-up light components can be moved relative to the immobile refracting end face (10a).

8. A sensor as claimed in Claim 1, characterised in that the spectral-selective modulator device consists of a variable wavelength-selective filter arranged in the beam path of the light emerging from the first optical fibre conductor (1) and whose transmission factor can be varied in dependence upon the physical parameter to be measured.

9. A sensor as claimed in Claim 8, characterised in that the variable wavelength-selective filter comprises an interference filter consisting of two mutually opposed refracting surfaces to be penetrated by the light supplied via the first optical fibre conductor (1) and separated by a short distance (d) which can be varied in dependence upon the physical parameter to be measured.

10. A sensor as claimed in Claim 9, characterised in that the mutually opposed refracting surfaces separated by a short distance (d) are formed on plates (12, 13) arranged in the beam path of the light supplied from the first optical fibre conductor (1).

11. A sensor as claimed in Claim 9, characterised in that the refracting surfaces arranged a short distance (d) apart are formed by opposed end faces of the first optical fibre conductor (1) and the other (4).

12. A sensor as claimed in Claim 11, characterised in that end sections of the first and the further optical fibre conductors (1, 4) which comprise the end faces arranged opposite one another, project into a housing (25; 25d; 26y), that one end section is fixed in a wall of the housing whereas the other end section is attached to a mobile component (26) which can be moved in the direction of the longitudinal axis of the end sections in dependence upon a pressure difference between the inside and the outside of the housing, and that a device (27, 28; 25a) for generating a variable pressure difference is arranged between the inside and the outside of the housing.

13. A sensor as claimed in Claim 12, characterised in that the mobile component (26) is connected by a bellows (26a) to an opening in the housing through which passes the end section attached to the mobile component (26).

14. A sensor as claimed in Claims 12 or 13, characterised in that the device (27, 28) for generating the pressure difference includes a piston (28) which extends in an opening (27) in the wall of the housing (25).

15. A sensor as claimed in one of Claims 12 to 14, characterised in that the device for generating the pressure difference includes a tube (25a) in which the housing (25d, 26y) is arranged, that the tube (25a) is closed at (25x) on one side of the housing, that a pressure can be generated in the tube on the other side of the housing, and that on this other side of the housing the wall (25d) of the housing contains at least one opening (25e).

16. A sensor as claimed in Claim 9, characterised in that the interference filter consists of a stepped plate (14a, 56), the thickness (d) of which varies from stage to stage, where, in each stage, the surface zones of the plate, which are arranged opposite one another, form the opposed, refracting surfaces which are penetrated by the light supplied via the first optical fibre conductor (1) and which are arranged at a short distance (d) from one another, and that in order to vary this distance (d) the stepped plate can be displaced, transversely to the direction of propagation of the incident light in dependence upon the physical parameter to be measured.

17. A sensor as claimed in Claim 8, characterised in that the wavelength-selective filter consists of an absorption filter (14b) which comprises a plurality of zones (e to h) with different transmission factors, and which can be displaced at right angles to the direction of propagation of light supplied from the first optical fibre conductor (1) in dependence upon the physical parameter to be measured.

18. A sensor as claimed in Claim 1, characterised in that the spectral-selective modulator device consists of a liquid crystal (30) which changes the colour of the light supplied from the first optical fibre conductor (1) in dependence upon a magnetic field to be measured.

19. A sensor as claimed in one of the preceding Claims, characterised in that the detector device comprises a beam splitter (15) for dividing the supplied light into a first and second beam, a first detector window (16) which receives the first light beam and is sensitive to a first spectral colour component, and a second detector window (17) which is sensitive to a second spectral colour component and receives the second light beam.

20. A sensor as claimed in Claim 19, characterised in that the detector windows (16, 17) are windows of electric light detectors arranged in a Wheatstone bridge.

21. A sensor as claimed in Claims 19 or 20, characterised in that each detector window (16, 17) is preceded by a light filter (18, 19).

22. A sensor as claimed in one of the preceding Claims, characterised in that the detector device includes a panel (50; 86E to 86H) composed of photosensitive elements.

23. The use of a sensor as claimed in any preceding Claim in a colour-multiplex sensor system.

13

FIG. 1

FIG. 2

FIG. 3

FIG. 4

FIG. 5

FIG. 6

FIG. 7

FIG. 8

3

FIG. 9

FIG. 10

4

FIG. 11

FIG. 12

FIG. 15

FIG. 13

FIG. 14

FIG. 16

FIG. 17

SHIFT
REGISTER

FIG. 18

**0 057 464**

FIG. 19

FIG. 20